Europäisches Patentamt

European Patent Office

Office européen des brevets

(11) Numéro de publication: **0 207 847**
**A1**

(12) **DEMANDE DE BREVET EUROPEEN**

(21) Numéro de dépôt: 86401344.6

(22) Date de dépôt: 19.06.86

(51) Int. Cl.⁴: **B 01 D 46/04**

(30) Priorité: 04.07.85 FR 8510197
09.01.86 FR 8600200

(43) Date de publication de la demande:
07.01.87 Bulletin 87/2

(84) Etats contractants désignés:
DE GB

(71) Demandeur: FRANCE DEPOUSSIERAGE INDUSTRIEL
45bis, rue Eugène Masse
F-93190 Livry-Gargan(FR)

(72) Inventeur: Touarin, Claude
85, rue Thiers
F-93340 Le Raincy(FR)

(72) Inventeur: Bontemps, Joel
Le Hameau de l'Etang
F-93470 Coubron(FR)

(74) Mandataire: Tony-Durand, Serge
Cabinet Tony-Durand 22, Boulevard Voltaire
F-75011 Paris(FR)

(54) Châssis de support pour élément filtrant.

(57) Sac filtrant enfilé sur un châssis de support (102) Pour améliorer le décolmatage du sac chaque châssis comporte un jeu de ressorts (116), parallèles entre eux, pour permettre en cas de brusque soufflage par l'évent (114) leur mise en vibration.

De plus, chacun des côtés latéraux (108) (109) du cadre (107) est formé de deux parties séparées (108a - 108b) (109a - 109b) ménageant entre elles un jeu dans lequel est monté un organe d'articulation (118), par exemple un ressort à spires jointives, permettant leur débattement relatif autour de ces articulations.

FIG. 6

"Châssis de support pour élément filtrant"

La présente invention est relative à un châssis de support pour un élément filtrant, du genre de ceux mis en batterie à l'intérieur d'un caisson de filtration et de dépoussiérage et permettant d'assurer une séparation entre de l'air à dépoussiérer présent à l'intérieur d'un local ou d'une enceinte raccordée au caisson et l'atmosphère extérieure ou une autre enceinte où l'air est refoulé après avoir été aspiré à travers les éléments filtrants du caisson.

On connait déjà de telles installations où le caisson de filtration comporte principalement, outre un ventilateur d'aspiration et des organes de commande et de régulation de celui-ci, une plaque de base, horizontale ou verticale fermant un côté du caisson et comprenant un ensemble de passages parallèles et allongés, destinés chacun au montage d'un châssis de support pour un élément filtrant. Chaque châssis comporte une armature interne métallique, de forme générale rectangulaire, formée sur trois côtés d'un cadre extérieur constitué au moyen de cornières métalliques soudées entre elles, de deux grillages parallèles, fixés sur les côtés du cadre et délimitant entre eux un espace étroit dont l'épaisseur correspond sensiblement à celle du châssis, une bride d'appui, s'étendant perpendiculairement au plan du cadre rectangulaire pour le montage du châssis sur la plaque de base avec interposition, entre bride et plaque, d'un joint d'étanchéité, un évent de sortie de l'air filtré formé par un conduit plat, ouvert à ses deux extrémités, prolongeant la bride d'appui à l'opposé des grillages de l'armature et solidarisé des côtés latéraux du cadre et enfin une manche ou sac filtrant, enfilé sur le cadre de l'armature et dont l'extrémité ouverte, opposée au fond du sac est immobilisée sous la bride d'appui par le joint d'étanchéité, lui-même fixé à la manche.

L'armature métallique et les grillages qu'elle comporte, sur lesquels est enfilé le sac filtrant de chaque châssis assure, entre les deux faces de ce sac un écartement sensiblement constant, l'étanchéité étant réalisée au montage grâce au joint fixé sur le sac et en appui sous la bride contre le bord du passage correspondant prévu dans la plaque de base.

Les châssis du genre ci-dessus, une fois mis en place à travers les passages prévus sur la plaque de base du caisson, sont immobilisés contre celle-ci par des organes de serrage de leur bride d'appui, en permettant de comprimer les joints d'étanchéité. En outre, on prévoit usuellement, à l'intérieur du caisson, au-dessus et au voisinage immédiat de l'évent de sortie d'air filtré, des conduits d'injection cyclique d'air comprimé, envoyé ainsi sous pression dans le sac filtrant de l'élément correspondant, ces conduits d'injection étant alimentés à travers les électrovannes de telle sorte que l'air injecté permette d'éviter le colmatage des sacs par les poussières accumulées sur leurs parois extérieures, en provoquant brutalement l'expansion limitée de ces sacs, autrement plaqués contre les grillages de chaque armature par l'effet de l'aspiration de l'air à dépoussiérer, aspiré à l'intérieur du caisson.

Or, l'utilisation de tels châssis présente en pratique certains inconvénients. En premier lieu, en raison de la rigidité des grillages de l'armature de chaque châssis, le décolmatage des parois des sacs filtrants ne se réalise pas de façon parfaite et exige notamment d'accroître sensiblement la fréquence des injections d'air comprimé, ce qui augmente le débit d'air, fatigue plus rapidement les mécanismes nécessaires et, au total, ne permet pas d'aboutir à un résultat fiable et efficace. En second lieu, en particulier lorsque, pour des raisons de construction du caisson, les châssis de support des éléments filtrants sont disposés de chant, la plaque de base étant elle-même verticale, se produisent sur l'armature, au voisinage des zones soudées de celle-ci, des efforts de cisaillement préjudiciables, surtout si les châssis présentent une longueur importante, exigeant un porte-à-faux notable. Il en résulte des difficultés, voire des défauts, qui rendent l'emploi de ces châssis parfois peu adaptés, en exigeant de fréquentes réparations ou changements et en augmentant largement le coût de fonctionnement des installations.

La présente invention concerne un châssis de support pour élément filtrant qui, grâce à une conception différente et à diverses améliorations apportées à sa structure, permet d'éviter les inconvénients précédents, en procurant un ensemble plus robuste, mieux apte à réaliser un décolmatage parfait des sacs filtrants et dont la sécurité de fonctionnement accrue s'accompagne en outre, d'un coût de fabrication notablement plus réduit.

A cet effet, le châssis de support considéré, comportant d'une part un sac filtrant, enfilé sur le châssis par son extrémité ouverte munie d'un joint d'étanchéité et d'autre part une armature rigide de forme rectangulaire, constituée d'un cadre s'étendant sur trois côtés de l'armature, d'une bride d'appui sur la périphérie d'un passage allongé ménagé dans une plaque de base d'un caisson de filtration et d'un évent de sortie pour l'air filtré, aspiré dans le caisson à travers les parois du sac filtrant, cet évent étant formé d'un conduit plat ouvert, prolongeant la bride d'appui et solidarisé des côtés latéraux du cadre, le joint porté par l'extrémité ouverte du sac étant monté entre la bride d'appui de l'armature et le bord du passage ménagé dans la plaque de base, se caractérise en ce que les parois du sac sont maintenues à un écartement sensiblement constant l'une de l'autre par un ensemble de ressorts de décolmatage, métalliques et parallèles, montés entre le côté du cadre opposé à la plaque de base et un organe d'accrochage situé au voisinage de la bride d'appui, la tension de ces ressorts étant suffisamment réduite pour que, lors d'une injection d'air comprimé à l'intérieur du sac à travers le conduit plat, se produise, outre le décollement des parois du sac vis-à-vis des ressorts, la mise en vibration mécanique de ces ressorts venant battre ces parois pour améliorer le décolmatage.

De préférence et selon un mode de réalisation préféré de l'invention, le cadre est formé d'un élément tubulaire cintré, s'étendant selon les trois côtés du cadre, sans solution de continuité d'une extrémité à l'autre de celui-ci.

Avantageusement et selon une caractéristique particulière, l'élément tubulaire du cadre constitue un collecteur, comportant dans ses parties recouvertes par le sac filtrant, des orifices dirigés vers l'intérieur du sac pour permettre la projection dans celui-ci d'un produit liquide ou gazeux, apte à provoquer l'extinction d'un feu accidentel, éventuellement déclaré à l'intérieur ou au voisinage du sac.

Les sacs filtrants peuvent être réalisés en tout matériau approprié, apte à assurer la filtration de l'air à dépoussiérer, du genre coton, matière plastique poreuse telle que le polypropylène, le térylène, le "Dralon", le "Téflon", le feutre de verre ou de fibres minérales ou organiques.

Selon une autre caractéristique particulière de l'invention, le châssis de support peut comporter, monté à l'intérieur de l'élément tubulaire cintré, formant le cadre de l'armature, une résistance électrique, permettant le réglage de la température de l'air aspiré dans le sac afin d'éviter les phénomènes de condensation, nuisibles à l'opération de filtration. En variante, l'élément tubulaire est raccordé à une source de vapeur ou d'air chaud, apte à produire les mêmes effets.

Selon une autre caractéristique avantageuse enfin, le cadre de l'armature comporte au moins un ressort complémentaire, tendu entre les deux côtés latéraux du cadre et s'étendant perpendiculairement aux ressorts de décolmatage, en limitant les oscillations de ceux-ci, notamment lorsqu'ils présentent des dimensions longitudinales importantes pour des châssis de très grandes dimensions.

D'autres caractéristiques et avantages d'un châssis de support établi conformément à l'invention apparaîtront encore, à travers la description qui suit, de plusieurs exemples de réalisation, donnés à titre indicatif et non limitatif, en référence aux dessins annexés sur lesquels :

- La figure 1 illustre un caisson de filtration, muni d'un ensemble de châssis de support pour éléments filtrants selon l'invention, où ces éléments sont portés par une plaque de base s'étendant verticalement.

- La figure 2 est une vue en perspective, avec arrachement partiel, d'un châssis entrant dans la réalisation du caisson de la figure 1.

- Les figures 3 et 4 illustrent divers détails complémentaires de la réalisation du châssis.

- La figure 5 est une vue schématique d'une autre variante de réalisation du caisson où les châssis de support sont disposés de chant en étant portés par une plaque de base placée dans ce cas verticale.

- La figure 6 est une vue schématique en perspective avec arrachement partiel d'un châssis de support pour élément filtrant, selon un autre mode de réalisation de l'invention, où l'armature du châssis comporte des moyens permettant d'assurer en complément un battage mécanique du sac filtrant.

- La figure 7 est une vue à plus grande échelle d'un détail caractéristique du mode de réalisation de la figure 6.

- La figure 8 est une vue de côté d'un caisson apte à contenir un ensemble de châssis filtrant selon la figure 6, placés en batterie parallèlement les uns aux autres, illustrant notamment un mode de réalisation d'un moyen annexe associé à ces châssis.

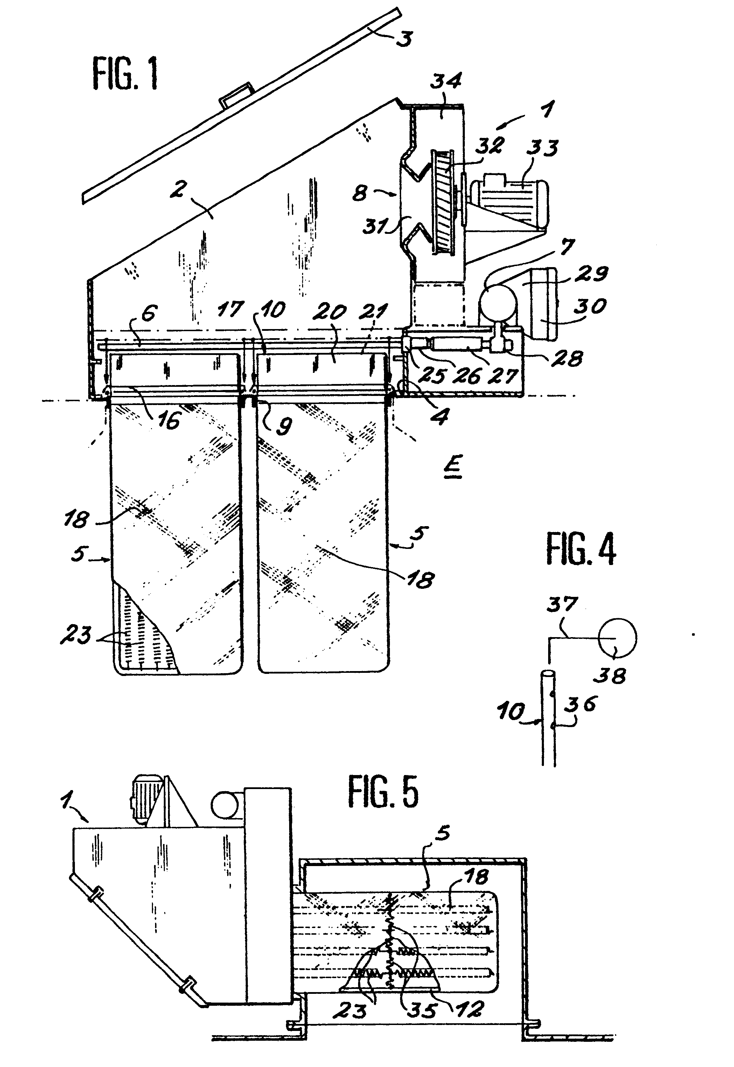

Le caisson de filtration représenté sur la figure 1, désigné dans son ensemble sous la référence 1, est destiné à assurer le dépoussiérage d'une enceinte E d'un type quelconque, du genre notamment d'un silo, d'une trémie de stockage, d'un élévateur ou transporteur de produits pulvérulents etc..., et plus généralement encore de tout local ou enceinte où des installations fonctionnent en continu ou discontinu, en créant un environnement qui nécessite, avant son rejet à l'atmosphère, une filtration efficace des poussières ou particules en suspension dans son ambiance. Sur cette figure, le caisson représenté est principalement constitué d'un boîtier métallique 2, présentant une large ouverture d'accès pour l'entretien ou la réparation des mécanismes qu'il comporte et également pour permettre le changement des éléments filtrants associés au caisson, cette ouverture d'accès étant normalement obturée par une trappe amovible 3. Le caisson 1 comporte par ailleurs une plaque de base 4 qui peut présenter une orientation quelconque mais est de préférence horizontale ou verticale (ici horizontale), cette plaque de base 4 portant de la façon qui sera indiquée plus loin, un ensemble de châssis de support 5 d'éléments filtrants, traversant cette plaque de manière étanche de telle sorte que l'air à dépoussiérer traverse nécessairement ces éléments avant d'être recueilli dans le caisson 1.

Pour assurer le décolmatage des éléments filtrants, le caisson 1 comporte également, selon des dispositions en elle-même classiques dans ce genre d'installation, des tubes transversaux 6, montés au-dessus de ces éléments, permettant à travers des passages appropriés, d'injecter à l'intérieur de ces éléments, selon des cyles à fréquence pré-déterminée, de l'air comprimé, l'alimentation des tubes 6 s'effectuant à partir d'un collecteur 7 situé à l'extérieur du caisson. Un ventilateur 8 permet par ailleurs, en régime normal, l'aspiration de l'air à dépoussiérer ayant traversé les éléments filtrants.

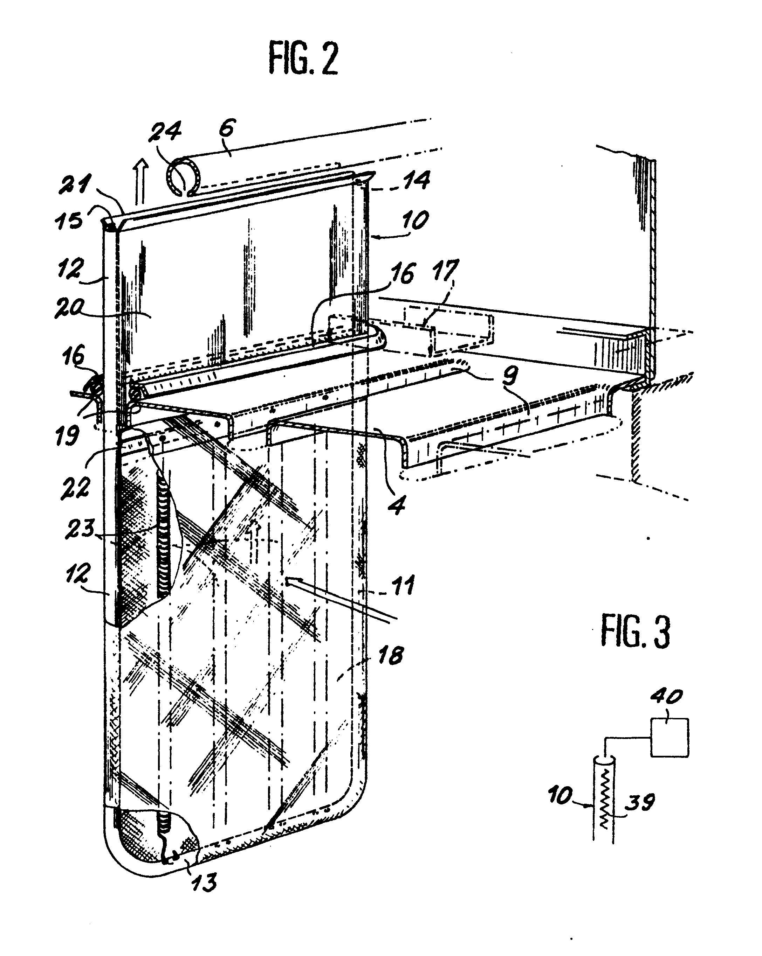

La figure 2 illustre plus particulièrement le détail de la réalisation d'un châssis de support 5 pour chacun des éléments filtrants selon l'invention, et de son montage sur la plaque de base 4 du caisson 1.

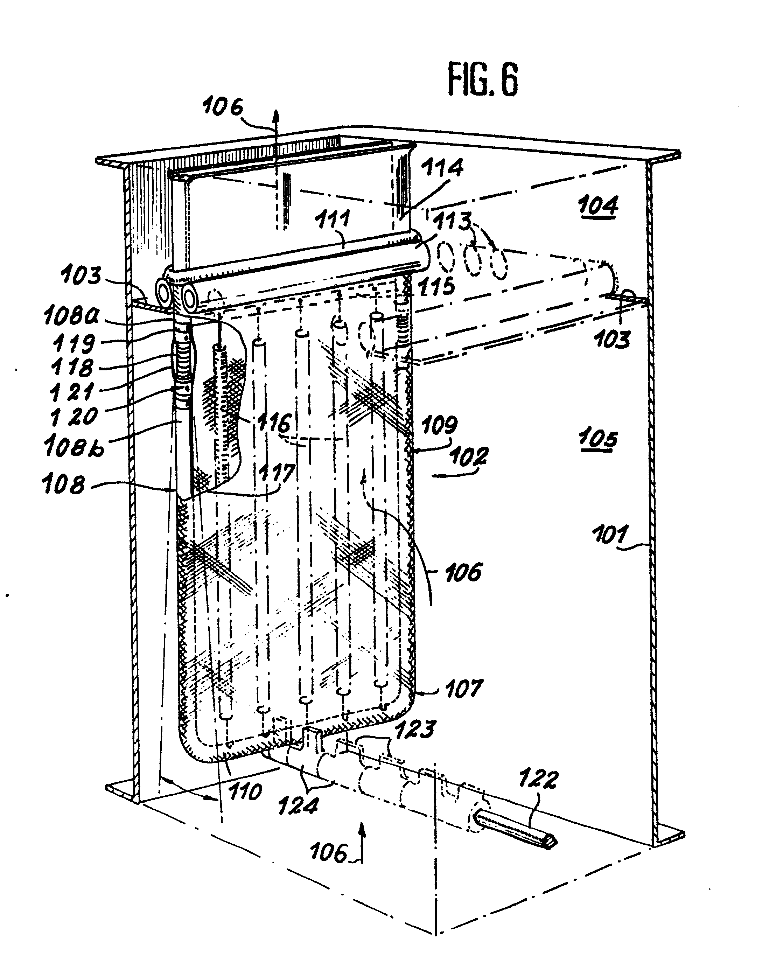

Sur cette figure, on voit que la plaque 4 présente pour recevoir chacun des châssis 5 des passages allongés 9, parallèles entre eux et à l'intérieur desquels s'engagent verticalement ces châssis. Chacun de ceux-ci est principalement formé d'une armature extérieure, qui selon l'invention, est constituée par un cadre tubulaire 10 convenablement cintré de manière à s'étendre sur trois côtés de l'armature, celle-ci présentant, une forme générale rectangulaire. Le cadre tubulaire 10 comporte ainsi deux côtés latéraux, respectivement 11 et 12 et un côté inférieur 13, réuni aux deux premiers sans solution de continuité. En outre, le cadre tubulaire 10 est ouvert aux extrémités respectivement 14 et 15 de ses côtés 11 et 12 afin de permettre le montage à l'intérieur du cadre tubulaire 10 d'accessoires éventuels, décrits plus loin (Figures 3 et 4).

Le support de chaque châssis 5 sur la plaque de base 4, après engagement dans le passage 9 correspondant, est réalisé au moyen d'une bride d'appui 16 prévue vers l'extrémité supérieure du cadre 10 de ce châssis, et s'étendant parallèlement au plan de la plaque de base.

Cette bride 16 est immobilisée sur la plaque au moyen d'organes de fixation appropriés qui, dans l'exemple de réalisation considéré, sont constitués par des cornières 17 en forme de U, bloquées sur la plaque de base pour serrer sur celle-ci chaque bride d'appui 16 par son bord supérieur, au moyen de vis (non représentées) ou de moyens analogues. L'élément filtrant de chaque châssis 5 est constitué par un sac ou une manche 18, réalisé en tout matériau approprié, du genre notamment d'un feutre de verre ou de fibres minérales ou organiques, ou encore en coton ou en un matériau plastique poreux. Chaque sac 18 est étroitement enfilé sur le cadre 10 de l'armature de telle sorte qu'il recouvre les côtés latéraux 11 et 12 de celui-ci ainsi que le côté inférieur 13, chaque sac comportant cousu ou fixé d'une autre façon à son extrémité supérieure, un joint continu 19 d'étanchéité, venant se loger sous la bride d'appui 16 en étant immobilisé entre cette dernière et la surface supérieure de la plaque de base 4, de manière à éviter que l'air à dépoussiérer situé dans l'enceinte E ne pénètre dans le caisson 1 sans avoir traversé l'un quelconque des éléments filtrants précédents. Au-dessus de la plaque de base 4, en prolongement de la bride d'appui 16, chaque châssis 5 comporte par ailleurs un évent de sortie de l'air filtré avant d'être recueilli dans le caisson 1, se présentant sous la forme d'un conduit plat 20, ouvert et dont l'extrémité supérieure 21 est légèrement évasée. Ce conduit 20 est disposé par construction en regard d'un tube 6 d'injection d'air comprimé, celui-ci présentant une fente 24 prévue à sa base pour permettre, selon un cycle prédéterminé, l'envoi d'une quantité d'air comprimé convenable dans le sac filtrant 18 correspondant, pour assurer de manière en elle-même connue, l'expansion brutale des parois de ce sac et leur décolmatage, en éliminant les poussières accumulées contre la surface extérieure de ces parois qui retombent dans l'enceinte E dans un système de récupération éventuel (non représenté) et dont le détail importe peu à l'invention.

Conformément à une caractéristique essentielle de cette dernière, l'écartement des parois du sac filtrant 18 de chaque châssis 5 est réalisé en fonctionnement normal, c'est-à-dire lors de l'aspiration de l'air à dépoussiérer, au moyen d'organes d'entretoisement particuliers, fixés entre une barrette transversale 22 disposée sous la bride d'appui 16 et le côté inférieur 13 du cadre tubulaire 10, ces organes étant constitués par des ressorts 23, ceux-ci présentant une tension propre suffisamment réduite pour que, lors de chaque injection d'air comprimé dans les conduits plats 20 et par suite à l'intérieur des sacs 18, se produisent non seulement l'expansion de ces sacs mais la mise en résonance mécanique des ressorts 23, qui, par leurs vibrations, viennent battre les parois latérales de ces sacs, en améliorant de manière particulièrement efficace leur décolmatage et l'élimination des poussières collées contre leurs surfaces extérieures.

Revenant à la figure 1, on voit plus en détail comment est effectué le raccordement des tubes 6 d'injection d'air comprimé dans chacun des châssis 5. Chaque tube est raccordé par un collier de serrage 25 ou analogue à un bloc distributeur 26 puis à un tube souple 27 et enfin, à travers celui-ci, à une électrovanne 28, elle-même raccordée au collecteur 7. L'ensemble des électrovannes correspondant à tous les tubes 6 du caisson est relié à un coffret de commande électronique 29-30, permettant d'actionner ces électrovannes avec la fréquence souhaitée pour le décolmatage des sacs filtrants. Sur la figure, on a représenté le pavillon d'entrée 31 du ventilateur 8 et la turbine 32 de celui-ci, entraînée par

un moteur électrique 33, disposé à l'extérieur du caisson 1, la turbine renvoyant l'air filtré hors de ce caisson dans l'atmosphère extérieure. Un registre coulissant 24 permet de régler le débit d'aspiration du ventilateur.

La structure particulière du châssis de support d'élément filtrant selon l'invention permet ainsi, par l'utilisation des ressorts 23 évitant, dans la phase d'aspiration, le colapsage des parois des sacs filtrants et maintenant toujours entre eux l'écartement indispensable au passage du débit de l'air aspiré, d'améliorer également très sensiblement le décolmatage de ces sacs par l'effet mécanique qu'ils procurent lors des injections d'air comprimé, en réduisant en outre, la consommation de ce dernier. De plus, l'emploi d'un élément tubulaire pour constituer le cadre de l'armature sur laquelle est enfilé le sac filtrant procure des avantages particuliers, notamment grâce à la robustesse de l'ensemble qui peut être réalisé par construction sans solution de continuité sur toute la longueur des trois côtés du cadre. Pour un encombrement diamétral identique, l'usage d'un tube cintré permet l'utilisation d'un conduit formant évent de sortie d'air présentant une largeur plus grande que dans les solutions antérieures déjà connues, ce qui limite les pertes de charge à la traversée de ce conduit et améliore le rendement d'aspiration global du ventilateur. Toutefois, notamment lorsque les châssis de support 5 présentent des dimensions longitudinales particulièrement importantes, la solution envisagée peut rendre souhaitable de limiter les oscillations des ressorts 23, en particulier, lorsque, comme représenté sur la figure 5, les châssis de support sont disposés de chant en s'étendant en porte-à-faux par rapport au caisson. A cet effet et selon une caractéristique particulière de l'invention, il est possible de monter au milieu de la longueur de chaque châssis, entre les deux côtés latéraux 11 et 12 du cadre tubulaire 10, un ressort complémentaire 35, réalisant selon la longueur des ressorts de décolmatage 23, un point d'ancrage souple au voisinage de leur partie médiane. Bien entendu, on peut également prévoir de monter plusieurs ressorts transversaux du genre ci-dessus, convenablement répartis selon la longueur des ressorts de décolmatage 23 afin d'obtenir, pour ces derniers, des modes de vibrations mieux adaptés à chaque type particulier de châssis utilisé et aux dimensions de ceux-ci.

Avantageusement et quel que soit le mode de montage des châssis adopté, le cadre tubulaire 10 de l'armature peut également comporter dans chacun de ses côtés latéraux 11 et 12, des orifices 36 (figure 4) dirigés vers l'intérieur du sac 18 correspondant, ces orifices permettant d'injecter à l'intérieur du sac un produit ignifuge approprié, dans le cas notamment d'un incendie se produisant dans l'installation. Dans ce cas, le cadre tubulaire 10 est raccordé par un conduit 37 à une réserve 38 d'un tel produit, associé à un détecteur d'incendie (non représenté) qui, en cas de feu accidentel, stoppe immédiatement le ventilateur 8 et provoque la projection du produit ignifuge à l'intérieur des sacs filtrants. En variante, également représentée sur la figure 3, le cadre tubulaire 10 peut comporter intérieurement une résistance électrique 39, raccordée à une source de tension 40 convenablement régulée, permettant d'ajuster la température de l'air aspiré à travers les sacs filtrants de manière à limiter, au niveau de ces derniers, les phénomènes de condensation toujours préjudiciable à un dépoussiérage efficace. De même, cette résistance électrique pourrait être selon les installations, remplacée par un écoulement de vapeur ou d'air chaud, établi par tout moyen approprié à travers le cadre tubulaire 10.

12

Dans les divers modes de réalisation décrits dans ce qui précède, l'élément filtrant considéré et, plus généralement, les ensembles de tels éléments montés en batterie à l'intérieur d'un caisson de filtration et de dépoussiérage, peuvent être aisément décolmatés après une période donnée d'utilisation par l'effet des chocs créés par les ressorts métalliques qui, du fait de l'injection d'air comprimé dans l'élément à l'intérieur du sac, entrent en résonance mécanique et par leurs vibrations, viennent battre les parois des sacs en réalisant l'élimination des poussières ou autres particules collées sur les surfaces extérieures de ces derniers.

Or dans certaines réalisations, on peut encore améliorer les capacités de décolmatage de l'élément filtrant considéré, en combinaison ou indépendamment de l'effet créé par injection d'air comprimé à l'intérieur du sac filtrant, en assurant dans tous les cas au cours du fonctionnement un nettoyage particulièrement efficace de ce sac grâce à un battage mécanique de celui-ci, libérant les poussières collées qui obstruent les orifices ou interstices ménagés à travers ce sac ou le média filtrant entourant le cadre support sur lequel sont tendus les ressorts oscillants.

Grâce à ces dispositions, il est ainsi possible d'ajouter éventuellement à l'effet de secouage dû aux mouvements d'oscillation des ressorts à l'intérieur du sac, provoqués par l'envoi dans celui-ci d'un débit donné d'air comprimé à contre-courant du sens qui correspond à l'écoulement normal du milieu à filtrer, un effet de battement mécanique du cadre portant ce sac, mis en oeuvre à intervalles de temps déterminés ou, le cas échéant, de façon continue, en permettant d'assurer à la fois la mise en vibration des ressorts et un mouvement propre pour le cadre, ces deux effets, pouvant être mis en oeuvre ensemble ou séparément, permettant d'obtenir un battage encore plus efficace.

Dans ce but, chacun des côtés latéraux du cadre du châssis sur lequel est enfilé le sac, est formé de deux parties séparées, ménageant entre elles un jeu dans lequel est monté un organe d'articulation entre les deux parties afin de permettre leur débattement relatif autour de ces articulations.

Les figures 6 à 8 illustrent une variante de réalisation munie d'un tel perfectionnement.

Sur la Figure 6, la référence 101 désigne schématiquement un caisson de filtration destiné à contenir des châssis tels que 102 conformes à l'invention, dont un seul apparaît sur le dessin pour faciliter la compréhension de la structure de celui-ci. Chacun des châssis 102 est porté dans le caisson 101 par une plaque de base transversale 103 solidarisée de la paroi interne du caisson et séparant le volume intérieur de celui-ci en deux régions respectivement 104 et 105, le passage de l'air ou plus généralement du fluide à filtrer à la traversée des châssis montés dans le caisson s'effectuant selon le sens des flèches 106, le fluide arrivant dans la région 105 sur l'extérieur des châssis 102 et traversant ceux-ci pour s'échapper dans la région 104 par l'intérieur de ces mêmes châssis, selon les dispositions déjà exposées.

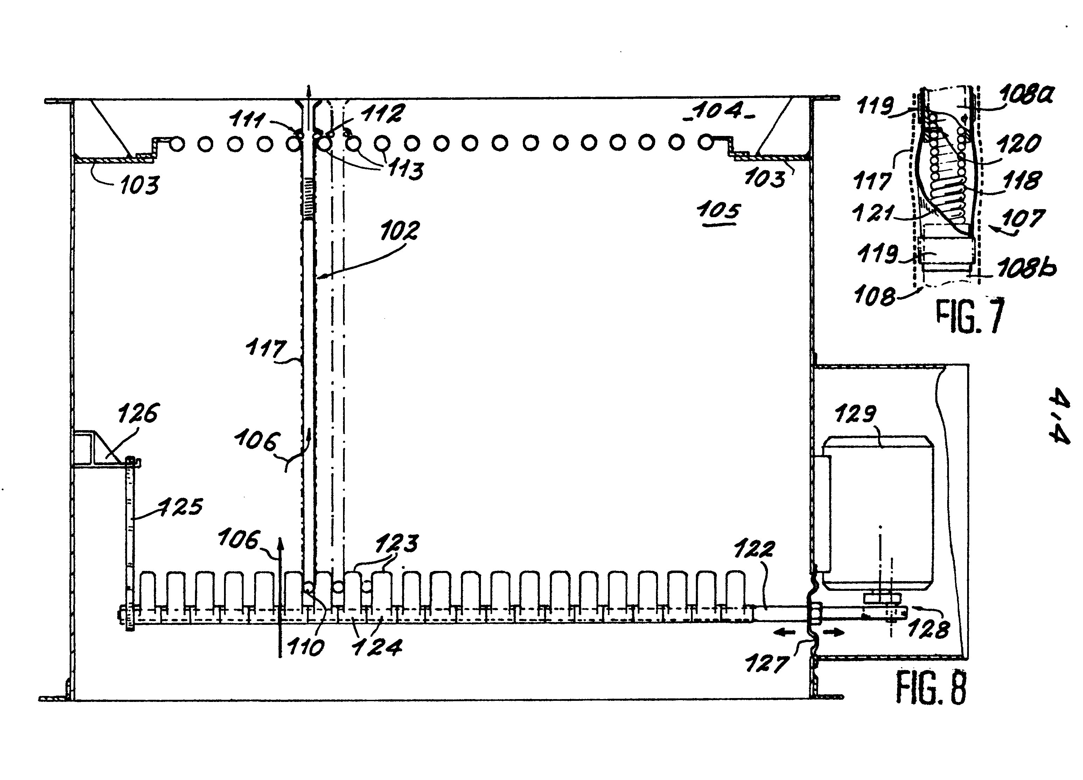

Chaque châssis 102 comporte à cet effet une armature 107 formée d'un cadre constitué de deux côtés latéraux 108 et 109 et d'un troisième côté 110, opposé à une bride 111 d'appui du châssis sur la plaque 103, avec interposition d'un joint d'étanchéité 112 (visible seulement sur la Figure 8). Dans l'exemple illustré sur les dessins, sur la plaque de base 103 sont soudés des éléments tubulaires parallèles tels que 113, délimitant deux à deux un passage dans lequel s'engage un châssis 102, la partie supérieure de chacun de ceux-ci dans la région 104 présentant un évent plat 114 pour la sortie de l'air filtré.

Chaque châssis 102 comporte par ailleurs, entre une barrette d'accrochage 115 prévue au voisinage de la bride 111 et le côté opposé 110 de l'armature 107, un jeu de ressorts métalliques 116, parallèles entre eux et dont la tension est calculée pour permettre en cas de brusque soufflage d'air par l'évent 114, en sens inverse du sens normal d'écoulement du fluide à filtrer, leur mise en vibration, de telle sorte qu'ils produisent sur un sac filtrant ou analogue 117, enfilé par l'extérieur sur l'armature 107 et dont le côté ouvert est solidaire du joint d'étanchéité 112, un effet efficace de battage, assurant le décollement des poussières ou autres fixées ou collées sur la paroi externe du sac 117.

Conformément à l'invention, chacun des deux côtés latéraux 108 et 109 de l'armature 107 est agencé pour comporter deux parties par exemple 108a et 108b (ou 109a et 109b) distinctes l'une de l'autre et réunies ensemble dans leur prolongement mutuel au moyen d'un ressort d'articulation 118, engagé à force dans les deux parties qu'il relie ou solidarisé de celles-ci par des colliers de fixation 119, coiffant les extrêmités des parties 108a et 108b et immobilisées en position par des vis, rivets ou autres 120. Avantageusement, l'étanchéité de l'armature 107 au droit de chaque ressort d'articulation 118 dans ses côtés 108 et 109 est réalisée en montant autour de ces ressorts une gaine tubulaire, souple et étanche 121, dont les extrêmités sont fixées sur les colliers 119 correspondants. (Voir le détail de la Figure 7).

Grâce aux ressorts d'articulation 118, on voit aisément que la partie de chaque châssis 102, formée par les éléments 108b, 109b et 110 de l'armature, peut subir vis-à-vis de son autre partie constituée des éléments 108a, 109a et de la bride 111 solidarisée de l'évent 114, fixe vis-à-vis de la plaque de base 103 du caisson 101, un mouvement de débattement transversal autorisé par la flexibilité propre de ces ressorts, avec un mouvement additionnel de secouage des châssis toléré par le sac filtrant 117 et permettant aux ressorts vibrants 116 de réaliser un battage mécanique complémentaire de la paroi du sac, rendant encore plus efficace le décolmatage et le nettoyage de celui-ci.

Afin d'autoriser le mouvement des châssis 102, on dispose de préférence, à l'intérieur du caisson 101, au voisinage du côté 110 de ces châssis opposé à leur bride d'appui 111, une barre de commande 122 s'étendant transversalement au plan du châssis 102 et comportant des doigts parallèles 123 entre lesquels chaque châssis est maintenu par l'engagement de son côté 110. Chaque doigt 123 est prolongé à cet effet par un collier 124, monté sur la barre 122 et immobilisé en position convenable sur celle-ci. Cette barre 122 est supportée à une extrêmité par un organe souple 125, du genre lanière de cuir ou analogue, fixé à son extrêmité opposée à un appui 126 prévu à l'intérieur du caisson 101. Bien entendu, cette disposition pourrait être remplacée par un mécanisme simple à articulation, sur la barre et sur le caisson, du moment qu'il autorise un mouvement de va-et-vient de la barre 122 parallèlement à elle-même, provoquant les débattements transversaux des châssis 102.

A l'extrêmité opposée de l'organe de support 125, la barre 122 traverse la paroi du caisson 101 par une membrane 127 autorisant son débattement, la partie de cette barre située de l'autre côté du caisson à l'extérieur de celui-ci étant réunie à un mécanisme à excentrique ou à bielle manivelle 128, entraîné par un moteur 129, transformant de manière ordinaire le mouvement de rotation de ce moteur en un mouvement alternatif de va-et-vient de la barre 122.

16

On confère ainsi à chacun des châssis monté à l'intérieur d'un caisson de dépoussiérage une possibilité de débattement transversal améliorant de façon tout à fait significative le décolmatage des sacs ou autres médias filtrants portés par l'armature de chacun de ces châssis. Les mouvements imposés aux châssis en se transmettant aux ressorts vibrants supportés par les armatures de ces châssis, permettent en effet à ces ressorts de venir battre énergiquement les parois en regard des sacs, en provoquant le décollement des poussières fixées sur ces parois.

Bien entendu, le secouage des châssis peut être réalisé selon chaque cas particulier d'utilisation avec des fréquences variables et selon des périodes de secouage déterminées.

## REVENDICATIONS

1. Châssis de support pour élément filtrant, comportant d'une part un sac filtrant (18), enfilé sur le châssis (5) par son extrémité ouverte munie d'un joint d'étanchéité (19) et d'autre part, une armature rigide de forme rectangulaire, constituée d'un cadre (10) s'étendant sur trois côtés de l'armature, d'une bride d'appui (16) sur la périphérie d'un passage (9) allongé ménagé dans une plaque de base (4), d'un caisson (1) de filtration et d'un évent de sortie (20) pour l'air filtré aspiré dans le caisson à travers les parois du sac filtrant, cet évent étant formé d'un conduit plat ouvert, prolongeant la bride d'appui et solidarisé des côtés latéraux du cadre, le joint (19), porté par l'extrémité ouverte du sac étant monté entre la bride d'appui de l'armature et le bord du passage ménagé dans la plaque de base, caractérisé en ce que les parois du sac (18) sont maintenues à un écartement sensiblement constant l'une de l'autre par un ensemble de ressorts de décolmatage (23), métalliques et parallèles, montés entre le côté (13) du cadre (10) opposé à la plaque de base et un organe d'accrochage (22) situé au voisinage de la bride d'appui (16), la tension de ces ressorts étant suffisamment réduite pour que, lors d'une injection d'air comprimé à l'intérieur du sac à travers le conduit plat, se produise, outre le décollement des parois du sac vis-à-vis des ressorts, la mise en vibration mécanique de ces ressorts venant battre ces parois pour améliorer le décolmatage.

2. Châssis de support pour élément filtrant, selon la revendication 1, caractérisé en ce que le cadre (10) de l'armature est formé d'un élément tubulaire cintré, s'étendant selon les trois côtés du cadre sans solution de continuité d'une extrémité à l'autre de celui-ci (Fig. 1 et 2).

3. Châssis de support pour élément filtrant, selon l'une des revendications 1 ou 2, caractérisé en ce que l'élément tubulaire du cadre constitue un collecteur, comportant, dans ses parties recouvertes (11, 12, 13) par le sac filtrant (18), des orifices (36) dirigés vers l'intérieur du sac pour permettre la projection dans celui-ci d'un produit liquide ou gazeux (figure 4).

4. Châssis de support pour élément filtrant, selon l'une quelconque des revendications 1 à 3, caractérisé en ce que les sacs filtrants (18) sont réalisés en tout matériau approprié, apte à assurer la filtration de l'air à dépoussiérer, du genre coton, matière plastique poreuse, feutre de verre ou de fibres minérales ou organiques.

5. Châssis de support pour élément filtrant, selon l'une des revendications 2 à 4, caractérisé en ce que le châssis de support comporte, monté à l'intérieur de l'élément tubulaire cintré formant le cadre de l'armature, une résistance électrique (39), permettant le réglage de la température de l'air aspiré dans le sac (figure 3).

6. Châssis de support pour élément filtrant, selon l'une des revendications 2 à 4, caractérisé en ce que l'élément tubulaire est raccordé à une source de vapeur ou d'air chaud.

7. Châssis de support pour élément filtrant, selon l'une quelconque des revendications 1 à 6, caractérisé en ce que le cadre de l'armature comporte au moins un ressort complémentaire (35), tendu entre les deux côtés latéraux (11-12) du cadre et s'étendant perpendiculairement aux ressorts de colmatage (23), pour limiter les oscillations de ceux-ci (figure 5).

8 - Châssis de support pour élément filtrant selon l'une quelconque des revendications 1 à 7, caractérisé en ce que chacun des côtés latéraux (108-109) du cadre (107) du châssis (102) sur lequel est enfilé le sac filtrant (117), est formé de deux parties séparées (108a-108b, 109a-109b), ménageant entre elles un jeu dans lequel est monté un organe d'articulation (118) entre les deux parties afin de permettre leur débattement relatif autour de ces articulations (figure 6).

9 - Châssis selon la revendication 8, caractérisé en ce que les deux parties (108a-108b, 109a-109b) de chaque côté (108-109) du cadre sont réunies l'une à l'autre par un ressort de raccordement (118) à spires jointives, dont les extrêmités sont engagées à force dans ces deux parties.

10 - Châssis selon la revendication 9, caractérisé en ce que chaque ressort de raccordement (118) est entouré d'une gaine souple et étanche (120) coiffant par recouvrement les extrêmités de deux parties du cadre qu'il réunit (figure 7).

11 - Châssis selon la revendication 8, caractérisé en ce que les articulations (118) prévues sur les côtés latéraux (108-109) du cadre (107) sont disposées sensiblement symétriquement vis-à-vis d'un plan transversal médian du châssis et au voisinage immédiat de sa bride d'appui (111).

12 - Châssis selon l'une quelconque des revendications 8 à 11, caractérisé en ce que le cadre (107·) est également articulé, du côté opposé à la bride d'appui, sur une barre de commande transversale (122) animée d'un mouvement de va-et-vient, déterminant l'amplitude du débattement du cadre.

13 - Châssis selon la revendication 12, caractérisé en ce que la barre de commande (122) coopère avec un excentrique (128), mis en rotation au moyen d'un moteur d'entraînement (129) (figure 8).

0207847

FIG. 1

FIG. 4

FIG. 5

FIG. 2

FIG. 3

## FIG. 6

FIG. 7

FIG. 8

4,4

0207847

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int Cl 4) |
|---|---|---|---|
| X | FR-A-1 224 851 (L. ROUJOB)<br>* Page 2, colonne de droite, paragraphes 4,7; page 3, colonne de droite, paragraphe 2 * | 1-3 | B 01 D 46/04 |
| A | DE-A-3 003 882 (H. WUKOJEWITSCH)<br>* Page 13, paragraphe 3; page 15, paragraphe 4; page 16, paragraphe 2; page 17, paragraphes 1,2; page 18, paragraphes 1,2 * | 1 | |
| A | DE-A-3 122 859 (H. WUKOJEWITSCH)<br>* Page 11, paragraphe 4; page 12, paragraphe 4; page 9, paragraphe 5 * | 1 | |
| A | DE-A-2 536 842 (HERMAN GEB. BRÜTTING)<br>* Page 2, paragraphe 4; page 7, paragraphe 1 * | 1,7 | **DOMAINES TECHNIQUES RECHERCHES (Int Cl 4)**<br><br>B 01 D |
| A | DE-A-2 821 847 (H. HÖLTER)<br>* Page 1; figure * | 2,3 | |
| A | US-A-3 963 467 (D.W. ROLSCHAU)<br>* Colonne 2, lignes 44-68; colonne 8, lignes 1-44 * | 1 | |
| | --- -/- | | |

Le présent rapport de recherche a été établi pour toutes les revendications

| Lieu de la recherche<br>**LA HAYE** | Date d'achèvement de la recherche<br>**01-09-1986** | Examinateur<br>**KERRES P.M.G.** |
|---|---|---|

OEB Form 1503 03 82

CATEGORIE DES DOCUMENTS CITES
X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

Numéro de la demande

**Office européen**
**des brevets**

## RAPPORT DE RECHERCHE EUROPEENNE

EP 86 40 1344

Page 2

| | **DOCUMENTS CONSIDERES COMME PERTINENTS** | | |
|---|---|---|---|
| Catégorie | Citation du document avec indication. en cas de besoin. des parties pertinentes | Revendication concernée | CLASSEMENT DE LA DEMANDE (Int Cl.4) |
| X | FR-A- 738 305 (APPAREILS S. NIESTLE) <br> * Page 2, lignes 25-103; page 3, lignes 67-85; page 5, lignes 22-28 * | 8,9,12 | |
| | --- | | |
| A | DE-C- 291 771 (MASCHINENBAU AG BALCKE) <br> * Page 2, lignes 54-68 * | 6 | |
| | --- | | |
| A | DE-A-2 055 688 (HEINRICH LÜHR VDI STAUBTECHNIK) <br> * Page 5, paragraphe 1; page 6, paragraphe 2 * | 8 | |
| | --- | | |
| A | US-A-3 636 680 (G. SEIDEL) <br> * Colonne 6, lignes 3-7 * | 12,13 | DOMAINES TECHNIQUES RECHERCHES (Int. Cl.4) |
| | ----- | | |

Le present rapport de recherche a été établi pour toutes les revendications

| Lieu de la recherche | Date d'achèvement de la recherche | Examinateur |
|---|---|---|
| LA HAYE | 01-09-1986 | KERRES P.M.G. |